# EUROPEAN PATENT APPLICATION

(11) **EP 4 715 969 A1**
(43) Date of publication of application: **25.03.2026**
(21) Application number: 24811075.1
(22) Date of filing: 17.05.2024
(51) Int. Cl.: H01M 50/105, H01G 11/70, H01G 11/76, H01G 11/78, H01G 11/84, H01M 10/04, H01M 10/0585, H01M 50/148, H01M 50/159, H01M 50/178, H01M 50/553

(54) **POWER STORAGE DEVICE, CONDUCTIVE MEMBER, LID UNIT, AND METHOD FOR MANUFACTURING POWER STORAGE DEVICE**

(30) Priority: 19.05.2023 JP 2023083536
(71) Applicant: Dai Nippon Printing Co., Ltd., Tokyo 162-8001 (JP)
(72) Inventor: MIYASHIRO, Kae, Tokyo 162-8001 (JP); URIU, Toshibumi, Tokyo 162-8001 (JP); KANAZAWA, Sayako, Tokyo 162-8001 (JP); SASAKI, Miho, Tokyo 162-8001 (JP)
(74) Representative: Müller-Boré & Partner Patentanwälte PartG mbB
(86) International application number: PCT/JP2024/018415
(87) International publication number: WO 2024/242068

(57) **Abstract**

The present invention is provided with: an electrode body that includes a current collector; an exterior film that wraps the electrode body; a lid body that is formed from a metal material and seals the electrode body together with the exterior film; and a conductive member that is connected to the lid body and the current collector. The conductive member is disposed between the lid body and the electrode body.

## Description

### Technical Field

The present invention relates to an electrical storage device, a conductive member, a lid unit, and a method for manufacturing the electrical storage device.

### Background Art

PTL 1 discloses an example of an electrical storage device. The electrical storage device includes an electrode assembly including a current collector, an outer packaging that seals the electrode assembly, and an electrode terminal connected to the current collector. The outer packaging includes an outer package film wrapping the electrode assembly and a lid joined to the outer package film. The electrode terminal is inserted into a through-hole formed in the lid. An end part of the current collector is joined to the electrode terminal.

### Citation List

### Patent Literature

PTL 1: Japanese Patent Laid-open Publication No. 2022-123686

### Summary of Invention

### Technical Problem

In order to suitably output power, it is preferable that the end part of the current collector is suitably constrained. In the electrical storage device, there is room for improvement in suitably constraining the end part of the current collector.

An object of the present invention is to provide an electrical storage device in which an end part of a current collector can be suitably constrained, a conductive member used for the electrical storage device, a lid unit including the conductive member, and a method for manufacturing an electrical storage device.

### Solution to Problem

An electrical storage device according to a first aspect of the present invention includes: an electrode assembly including a current collector; an outer package film that wraps the electrode assembly; a lid that contains a metal material and seals the electrode assembly together with the outer package film; and a conductive member connected to the lid and the current collector, in which the conductive member is disposed between the lid and the electrode assembly.

An electrical storage device according to a second aspect of the present invention is the electrical storage device according to the first aspect, in which the lid includes a recessed portion that houses at least a part of the conductive member.

An electrical storage device according to a third aspect of the present invention is the electrical storage device according to the first aspect, in which the conductive member includes: a base portion joined to the lid; and a clamping portion that is connected to the base portion and clamps the current collector.

A conductive member according to a fourth aspect of the present invention is a conductive member used for an electrical storage device, in which the electrical storage device includes: an electrode assembly including a current collector; an outer package film that wraps the electrode assembly; and a lid that contains a metal material and seals the electrode assembly together with the outer package film, and the conductive member is disposed between the lid and the electrode assembly, and is connected to the lid and the current collector.

A lid unit according to a fifth aspect of the present invention includes: the conductive member according to the fourth aspect; and the lid joined to the conductive member.

A method for manufacturing an electrical storage device according to a sixth aspect of the present invention is a method for manufacturing an electrical storage device including: an electrode assembly including a current collector; an outer package film that wraps the electrode assembly; a lid that contains a metal material and seals the electrode assembly together with the outer package film; and a conductive member connected to the lid and the current collector, in which the conductive member is disposed between the lid and the electrode assembly. The method for manufacturing an electrical storage device includes: a first connection step of connecting the current collector and the conductive member; and a second connection step of connecting the conductive member and the lid.

A method for manufacturing an electrical storage device according to a seventh aspect of the present invention is the method for manufacturing an electrical storage device according to the sixth aspect, in which the first connection step is carried out earlier than the second connection step.

An electrical storage device according to an eighth aspect of the present invention includes: an electrode assembly including a current collector; an outer package film that wraps the electrode assembly; a lid that seals the electrode assembly together with the outer package film; and a conductive member connected to the lid and the current collector, in which the lid includes: a first surface facing the electrode assembly; a second surface opposite to the first surface; and a through-hole penetrating the first surface and the second surface, the conductive member includes: a base portion joined to the current collector; and a protrusion connected to the base portion and inserted into the through-hole, and a thickness of the base portion is larger than a thickness of the protrusion in side view or plan view.

An electrical storage device according to a ninth aspect of the present invention is the electrical storage device according to the eighth aspect, in which a tip end of the protrusion is located inside the through-hole.

An electrical storage device according to a tenth aspect of the present invention is the electrical storage device according to the eighth aspect, in which a tip end of the protrusion is located outside the through-hole.

A conductive member according to an eleventh aspect of the present invention is a conductive member used for an electrical storage device, in which the electrical storage device includes: an electrode assembly including a current collector; an outer package film that wraps the electrode assembly; and a lid that seals the electrode assembly together with the outer package film, the lid includes: a first surface facing the electrode assembly; a second surface opposite to the first surface; and a through-hole penetrating the first surface and the second surface, the conductive member includes: a base portion joined to the current collector; and a protrusion connected to the base portion and inserted into the through-hole, and a thickness of the base portion is larger than a thickness of the protrusion in side view or plan view.

A lid unit according to a twelfth aspect of the present invention includes: the conductive member according to the eleventh aspect; and the lid joined to the conductive member.

A method for manufacturing an electrical storage device according to a thirteenth aspect of the present invention is a method for manufacturing an electrical storage device including: an electrode assembly including a current collector; an outer package film that wraps the electrode assembly; a lid that seals the electrode assembly together with the outer package film; and a conductive member connected to the lid and the current collector, in which the lid includes: a first surface facing the electrode assembly; a second surface opposite to the first surface; and a through-hole penetrating the first surface and the second surface, the conductive member includes: a base portion joined to the current collector; and a protrusion connected to the base portion and inserted into the through-hole, and a thickness of the base portion is larger than a thickness of the protrusion in side view or plan view. The method for manufacturing an electrical storage device includes: a first connection step of connecting the current collector and the conductive member; and a second connection step of connecting the conductive member and the lid.

A method for manufacturing an electrical storage device according to a fourteenth aspect of the present invention is the method for manufacturing an electrical storage device according to the thirteenth aspect, in which the first connection step is carried out earlier than the second connection step.

An electrical storage device according to a fifteenth aspect of the present invention includes: an electrode assembly including a current collector; an outer package film that wraps the electrode assembly; a lid that seals the electrode assembly together with the outer package film; and a conductive member connected to the lid and the current collector, in which the conductive member includes: a base portion joined to the current collector; and a protrusion connected to the base portion and inserted between the outer package film and the lid, and a thickness of the base portion is larger than a thickness of the protrusion in side view or plan view.

A conductive member according to a sixteenth aspect of the present invention is a conductive member used for an electrical storage device, in which the electrical storage device includes: an electrode assembly including a current collector; an outer package film that wraps the electrode assembly; and a lid that seals the electrode assembly together with the outer package film, the conductive member includes: a base portion joined to the current collector; and a protrusion connected to the base portion and inserted between the outer package film and the lid, and a thickness of the base portion is larger than a thickness of the protrusion in side view or plan view.

A lid unit according to a seventeenth aspect of the present invention includes: the conductive member according to the sixteenth aspect; and the lid joined to the conductive member.

A method for manufacturing an electrical storage device according to an eighteenth aspect of the present invention is a method for manufacturing an electrical storage device including: an electrode assembly including a current collector; an outer package film that wraps the electrode assembly; a lid that seals the electrode assembly together with the outer package film; and a conductive member connected to the lid and the current collector, in which the conductive member includes: a base portion joined to the current collector; and a protrusion connected to the base portion and inserted between the outer package film and the lid, and a thickness of the base portion is larger than a thickness of the protrusion in side view or plan view. The method for manufacturing an electrical storage device includes: a first connection step of connecting the current collector and the conductive member; and a second connection step of connecting the conductive member and the lid.

A method for manufacturing an electrical storage device according to a nineteenth aspect of the present invention is the method for manufacturing an electrical storage device according to the eighteenth aspect, in which the first connection step is carried out earlier than the second connection step.

### Advantageous Effects of Invention

According to the electrical storage device, the conductive member, the lid unit, and the method for manufacturing an electrical storage device according to the present invention, the end part of the current collector can be suitably constrained.

### Brief Description of Drawings

[FIG. 1A] Fig. 1A is a perspective view of an electrical storage device according to an embodiment.
[FIG. 1B] Fig. 1B is a view relating to a method for measuring a sealing strength of a second seal portion of the electrical storage device of Fig. 1.
[FIG. 2] Fig. 2 is a sectional view showing a layer configuration of an outer package film of the electrical storage device of Fig. 1.
[FIG. 3] Fig. 3 is a view in which the outer package film of the electrical storage device of Fig. 1 is unfolded.
[FIG. 4] Fig. 4 is a perspective view of a lid included in the electrical storage device of Fig. 1.
[FIG. 5] Fig. 5 is a sectional view taken along line D5-D5 in Fig. 1A.
[FIG. 6] Fig. 6 is a flowchart showing an example of a manufacturing process of the electrical storage device of Fig. 1.
[FIG. 7] Fig. 7 is a sectional view of an electrical storage device of a first modification.
[FIG. 8] Fig. 8 is a sectional view of an electrical storage device of a second modification.
[FIG. 9] Fig. 9 is a sectional view of an electrical storage device of a third modification.
[FIG. 10] Fig. 10 is a sectional view of an electrical storage device of another modification of the third modification.
[FIG. 11] Fig. 11 is a sectional view of an electrical storage device of a fourth modification.
[FIG. 12] Fig. 12 is a sectional view of an electrical storage device of another modification of the fourth modification.

### Description of Embodiments

Hereinafter, an electrical storage device according to an embodiment of the present invention will be described with reference to the drawings. Note that, in this specification, a numerical range indicated by the term "A to B" means "A or more" and "B or less". For example, the notation 2 to 15 mm means 2 mm or more and 15 mm or less.

### [Embodiments]

### <1-1. Configuration of electrical storage device>

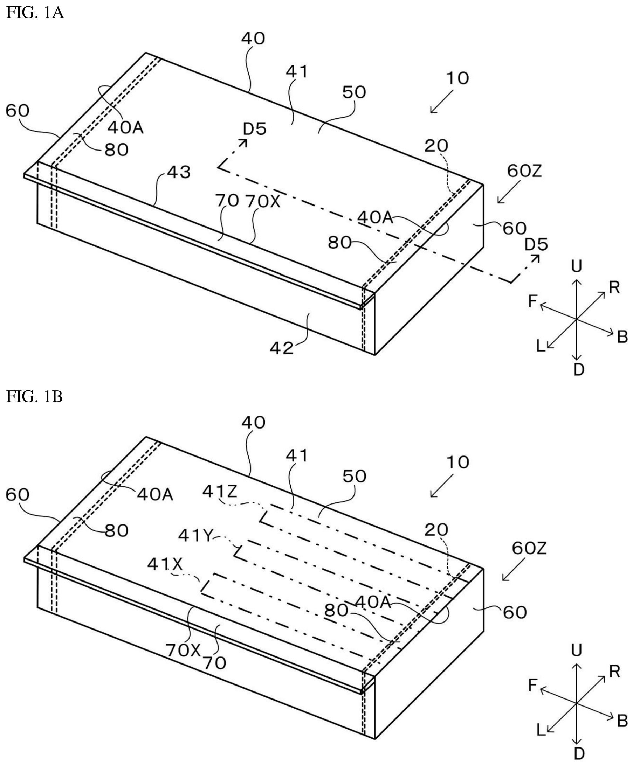

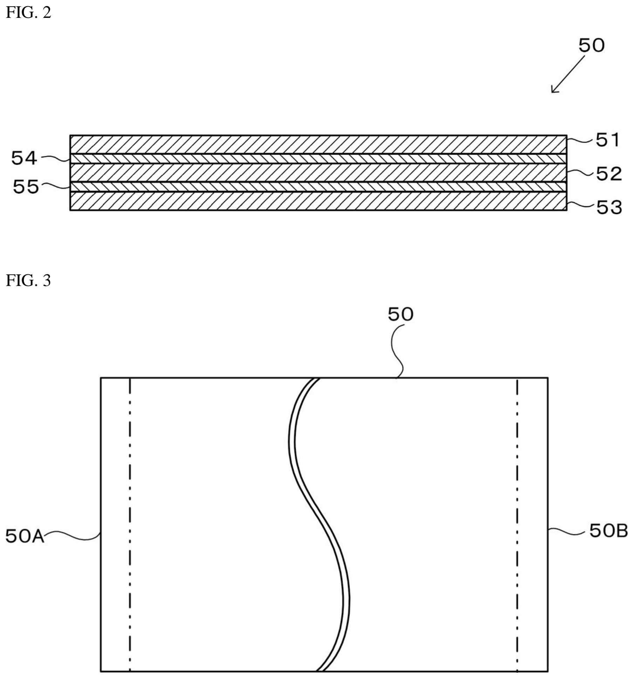

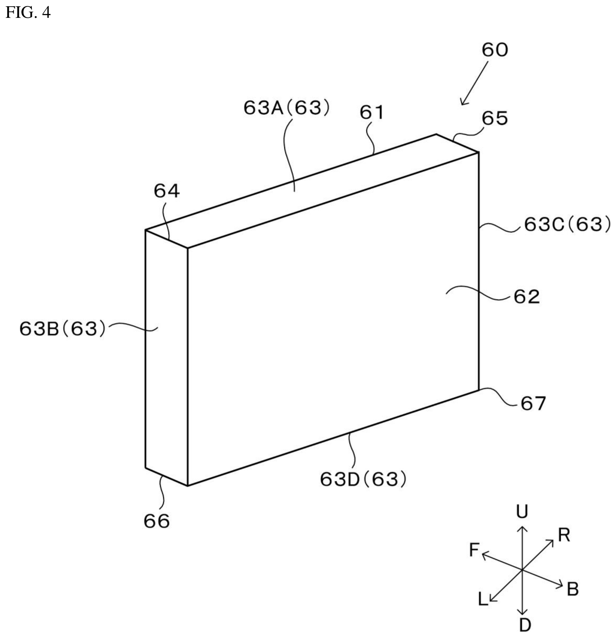

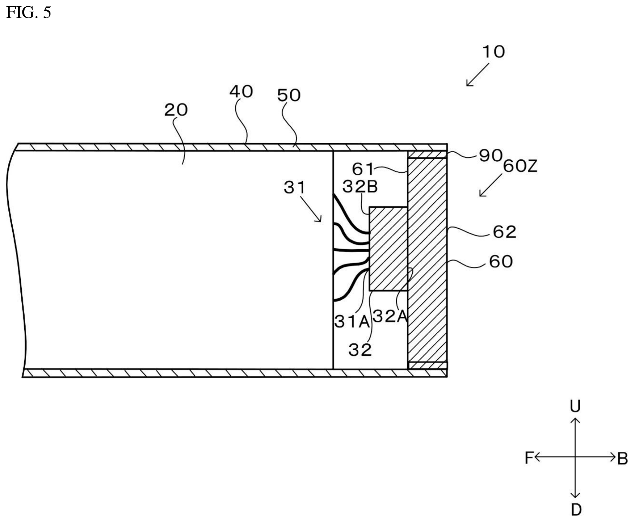

Fig. 1A is a plan view schematically showing an electrical storage device 10 of an embodiment. Fig. 1B is a view relating to a method for measuring a sealing strength of a second seal portion 80 of the electrical storage device 10 in Fig. 1A. Fig. 2 is a sectional view showing a layer configuration of an outer package film 50 included in the electrical storage device 10 in Fig. 1A. Fig. 3 is a view in which the outer package film 50 included in the electrical storage device 10 of Fig. 1A is unfolded. Fig. 4 is a perspective view of a lid 60 included in the electrical storage device 10 in Fig. 1A. Fig. 5 is a sectional view taken along line D5-D5 in Fig. 1A. Note that in Fig. 1A, the direction along the arrow UD indicates a thickness direction of the electrical storage device 10, the direction along the arrow LR indicates a width direction of the electrical storage device 10, and the direction along the arrow FB indicates a depth direction of the electrical storage device 10. The direction indicated by each of arrows UD, LR, and FB is also shared across the subsequent drawings.

The electrical storage device 10 includes an electrode assembly 20 including a current collector 31, a conductive member 32, and an outer packaging 40. The electrode assembly 20 includes, for example, a lithium ion battery, a capacitor, a lithium ion polymer battery, an all-solid-state battery, a semi-solid-state battery, a pseudo-solid-state battery, a polymer battery, an all-polymer battery, a lead storage battery, a nickel-hydrogen storage battery, a nickel-cadmium storage battery, a nickel-iron storage battery, a nickel-zinc storage battery, a silver oxide-zinc storage battery, a metal-air battery, a polyvalent cation battery, or electrodes (positive electrode and negative electrode) constituting an electrical storage member such as a capacitor, and a separator. In the present embodiment, the shape of the electrode assembly 20 is substantially a cuboid. Note that the "substantially cuboid" includes a perfect cuboid and also a solid that can be seen as a cuboid by modifying the shape of a part of the outer surface thereof, for example. The shape of the electrode assembly 20 may be, for example, a cylinder or a polygonal prism.

One end part 31A of the current collector 31 (see Fig. 5) is connected to the conductive member 32 (see Fig. 5) described later.

The outer packaging 40 seals the electrode assembly 20. The outer packaging 40 includes the outer package film 50 and the lid 60. The outer package film 50 wraps the electrode assembly 20 so as to have an opening part 40A. In the present embodiment, the outer package film 50 is wound around the electrode assembly 20 so as to have the opening part 40A. The lid 60 is disposed on a side of the electrode assembly 20 so as to close the opening part 40A. Note that the electrode assembly 20 may be housed inside the outer package film 50 configured into a tubular shape such that the opening part 40A is formed, and the opening part 40A may be closed by the lid 60.

For example, there is a method in which a housing portion (recess) for housing the electrode assembly 20 is formed in the outer package film 50 through cold molding. However, it is not always easy to form a deep housing portion by such a method. When an attempt is made to form a deep (for example, 15 mm in terms of molding depth) accommodating portion (recess) by cold molding, pinholes or cracks are generated in the outer package film 50, leading to a rise in possibility that battery performance is degraded. On the other hand, since the outer packaging 40 seals the electrode assembly 20 by winding the outer package film 50 around the electrode assembly 20, the electrode assembly 20 can be easily sealed regardless of the thickness of the electrode assembly 20. Note that, for reducing a dead space between the electrode assembly 20 and the outer package film 50 in order to improve the volume energy density of the electrical storage device 10, it is preferable that the outer package film 50 is wound in a state of being in contact with the outer surface of the electrode assembly 20. In an all-solid-state battery, it is necessary to eliminate the space between the electrode assembly 20 and the outer package film 50 from the viewpoint that it is necessary to uniformly apply a high pressure from the outer surface of the battery for exhibiting battery performance, and therefore, the state where the outer package film 50 is in contact with and is wound around the outer surface of the electrode assembly 20 is preferable.

As shown in Fig. 2, the outer package film 50 is, for example, a laminate (laminate film) including a base material layer 51, a barrier layer 52, and a heat-sealable resin layer 53 in the stated order. Note that the outer package film 50 is not required to include all these layers, and may be free of, for example, the barrier layer 52. In other words, the outer package film 50 is only required to be formed from a material that is flexible and easy to bend, and the outer package film 50 may be formed from, for example, a resin film. Note that the outer package film 50 is preferably heat-sealable. In the outer package film 50, the innermost layer and the outermost layer may be the heat-sealable resin layers 53. In this case, the outer package film 50 may wrap the electrode assembly 20 and the lid 60 by the outermost layer and the innermost layer being joined to each other.

The base material layer 51 included in the outer package film 50 is a layer for imparting heat resistance to the outer package film 50 to suppress generation of pinholes which may occur during processing or distribution. The base material layer 51 includes, for example, at least one layer of a stretched polyester resin layer and a stretched polyamide resin layer. For example, by the base material layer 51 including at least one layer of a stretched polyester resin layer and a stretched polyamide resin layer, the barrier layer 52 can be protected during processing of the outer package film 50 to suppress breakage of the outer package film 50. From the viewpoint of increasing the tensile elongation of the outer package film 50, the stretched polyester resin layer is preferably a biaxially stretched polyester resin layer, and the stretched polyamide resin layer is preferably a biaxially stretched polyamide resin layer. Further, from the viewpoint of excellent piercing strength or impact strength, the stretched polyester resin layer is more preferably a biaxially stretched polyethylene terephthalate (PET) film, and the stretched polyamide resin layer is more preferably a biaxially stretched nylon (ONy) film. Note that the base material layer 51 may include both a stretched polyester resin layer and a stretched polyamide resin layer. From the viewpoint of film strength, the thickness of the base material layer 51 is, for example, preferably 5 µm to 300 µm, more preferably 5 µm to 150 µm.

The barrier layer 52 is a layer which suppresses at least ingress of moisture. The barrier layer 52 is joined to, for example, the base material layer 51 with an adhesive layer 54 interposed therebetween. Examples of the barrier layer 52 include metal foils, deposited films, and resin layers having a barrier property. Examples of the deposited film include metal deposited films, inorganic oxide deposited films and carbon-containing inorganic oxide deposited films, and examples of the resin layer include those of polyvinylidene chloride, fluorine-containing resins such as polymers containing chlorotrifluoroethylene (CTFE) as a main component, polymers containing tetrafluoroethylene (TFE) as a main component, polymers having a fluoroalkyl group, and polymers containing a fluoroalkyl unit as a main component, and ethylene vinyl alcohol copolymers. Examples of the barrier layer 52 include resin films provided with at least one of these deposited films and resin layers. A plurality of barrier layers 52 may be provided. Preferably, the barrier layer 52 includes a layer formed from a metal material. Specific examples of the metal material constituting the barrier layer 52 include aluminum alloys, stainless steel, titanium steel and steel sheets, and in a case where the metal material is used as a metal foil, it is preferable that the metal material includes at least one of an aluminum alloy foil and a stainless steel foil.

In the barrier layer 52, the layer formed from the metal material described above may contain a recycled metal material. Examples of the recycled metal material include recycled materials of an aluminum alloy, stainless steel, titanium steel, and a steel plate. These recycled materials can be each obtained by a known method. The recycled material of the aluminum alloy can be obtained by, for example, a manufacturing method described in International Publication No. WO 2022/092231. The barrier layer 52 may be formed only from a recycled material, or may be formed from a mixed material of a recycled material and a virgin material. Note that the recycled metal material is a metal material obtained by, for example, collecting, isolating and purifying various products used in a so-called commercial market, wastes from manufacturing processes, and the like, such that the material can be reused. The virgin material from a metal material is a new metal material obtained by refining a metal natural resource (raw material), which is not a recycled material.

The aluminum alloy foil is more preferably a soft aluminum alloy foil formed from, for example, an annealed aluminum alloy from the viewpoint of improving the moldability or followability of the outer package film 50, and is preferably an aluminum alloy foil containing iron from the viewpoint of further improving the moldability or the followability. In the aluminum alloy foil containing iron (100 mass%), the content of iron is preferably 0.1 to 9.0 mass%, more preferably 0.5 to 2.0 mass%. By the content of iron being 0.1 mass% or more, it is possible to obtain the outer package film 50 having more excellent moldability. By the content of iron being 9.0 mass% or less, it is possible to obtain the outer package film 50 having more excellent flexibility. If necessary, silicon, magnesium, copper, manganese or the like may be added. Softening can be performed by annealing or the like. From the viewpoint of improving mechanical strength of the outer package film 50, the aluminum alloy foil is more preferably a hard aluminum alloy foil formed from, for example, a work-hardened aluminum alloy.

Examples of the stainless steel foil include austenitic stainless steel foils, ferritic stainless steel foils, austenitic/ferritic stainless steel foils, martensitic stainless steel foils, and precipitation-hardened stainless steel foils. From the viewpoint of providing the outer package film 50 having further excellent moldability, it is preferable that the stainless steel foil is formed from austenitic stainless steel.

Specific examples of the austenitic stainless steel constituting the stainless steel foil include SUS304, SUS301, and SUS316L, and among these, SUS304 is especially preferable.

In a case where the barrier layer 52 is a metal foil, it is only necessary for the barrier layer 52 to exhibit a function as a barrier layer suppressing at least ingress of moisture, and the barrier layer 52 has a thickness of, for example, about 9 µm to 200 µm. The thickness of the barrier layer 52 is preferably about 85 µm or less, more preferably about 50 µm or less, still more preferably about 40 µm or less, particularly preferably about 35 µm or less. Also, the thickness of the barrier layer 52 is preferably about 9.0 µm or more, more preferably about 20 µm or more, still more preferably about 25 µm or more. The thickness of the barrier layer 52 is preferably in the range of about 9.0 to 85 µm, about 9.0 to 50 µm, about 9.0 to 40 µm, about 9.0 to 35 µm, about 20 to 85 µm, about 20 to 50 µm, about 20 to 40 µm, about 20 to 35 µm, about 25 to 85 µm, about 25 to 50 µm, about 25 to 40 µm, or about 25 to 35 µm. In a case where the barrier layer 52 is formed from an aluminum alloy foil, the thickness thereof is especially preferably in above-described range. From the viewpoint of imparting high moldability and high rigidity to the outer package film 50, the thickness of the barrier layer 52 is preferably about 35 µm or more, more preferably about 45 µm or more, still more preferably about 50 µm or more, still more preferably about 55 µm or more, and preferably about 200 µm or less, more preferably about 85 µm or less, still more preferably about 75 µm or less, still more preferably about 70 µm or less, and is preferably in the range of about 35 to 200 µm, about 35 to 85 µm, about 35 to 75 µm, about 35 to 70 µm, about 45 to 200 µm, about 45 to 85 µm, about 45 to 75 µm, about 45 to 70 µm, about 50 to 200 µm, about 50 to 85 µm, about 50 to 75 µm, about 50 to 70 µm, about 55 to 200 µm, about 55 to 85 µm, about 55 to 75 µm, or about 55 to 70 µm. By the outer package film 50 having high moldability, deep drawing molding can be facilitated, which contributes to an increase in capacity of the electrical storage device. Although the weight of the electrical storage device increases when the capacity of the electrical storage device is increased, enhancement of the rigidity of the outer package film 50 can contribute to high sealing performance of the electrical storage device. In particular, when the barrier layer 52 is formed from a stainless steel foil, the thickness of the stainless steel foil is preferably about 60 µm or less, more preferably about 50 µm or less, still more preferably about 40 µm or less, still more preferably about 30 µm or less, particularly preferably about 25 µm or less. The thickness of the stainless steel foil is preferably about 10 µm or more, more preferably about 15 µm or more. The thickness of the stainless steel foil is preferably in the range of about 10 µm to 60 µm, about 10 µm to 50 µm, about 10 µm to 40 µm, about 10 µm to 30 µm, about 10 µm to 25 µm, about 15 µm to 60 µm, about 15 µm to 50 µm, about 15 µm to 40 µm, about 15 µm to 30 µm, or about 15 µm to 25 µm.

In a case where the barrier layer 52 is an aluminum foil, it is preferable that a corrosion-resistant film is provided at least on a surface on a side opposite to the base material layer 51 for prevention of dissolution, corrosion, and the like. The barrier layer 52 may include a corrosion-resistant film on each of both surfaces. Here, the corrosion-resistant film refers to a thin film obtained by subjecting the surface of the barrier layer 52 to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (for example, acid resistance and alkali resistance) to the barrier layer 52. Specifically, the corrosion-resistant film means a film which improves the acid resistance of the barrier layer 52 (acid-resistant film), a film which improves the alkali resistance of the barrier layer 52 (alkali-resistant film), or the like. One of treatments for forming the corrosion-resistant film may be performed, or two or more kinds thereof may be performed in combination. Not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. Note that the definition of the chemical conversion treatment may include these treatments. In a case where the barrier layer 52 is provided with the corrosion-resistant film, the barrier layer 52 is regarded as including the corrosion-resistant film.

The corrosion-resistant film exhibits the effects of preventing delamination between the barrier layer 52 (e.g. an aluminum alloy foil) and the base material layer 51 during molding of the outer package film 50; preventing dissolution and corrosion of the surface of the barrier layer 52, particularly dissolution and corrosion of aluminum oxide present on the surface of the barrier layer 52 when the barrier layer 52 is an aluminum alloy foil, by hydrogen fluoride generated by reaction of an electrolyte with moisture; improving the bondability (wettability) of the surface of the barrier layer 52; preventing delamination between the base material layer 51 and the barrier layer 52 during heat-sealing; and preventing delamination between the base material layer 51 and the barrier layer 52 during molding.

The heat-sealable resin layer 53 is joined to, for example, the barrier layer 52 with an adhesive layer 55 interposed therebetween. The heat-sealable resin layer 53 included in the outer package film 50 is a layer that imparts a sealing property to the outer package film 50 by heat sealing. Examples of the heat-sealable resin layer 53 include resin films formed of a polyester-based resin such as a polyethylene terephthalate-based resin or a polybutylene terephthalate-based resin, a polyolefin-based resin such as a polyethylene-based resin or a polypropylene-based resin, or an acid-modified polyolefin-based resin obtained by graft-modifying the polyolefin-based resin with an acid such as maleic anhydride. From the viewpoint of sealability and strength, the thickness of the heat-sealable resin layer 53 is, for example, preferably 20 µm to 300 µm, more preferably 40 µm to 150 µm.

The outer package film 50 preferably includes one or more layers having a buffer function (hereinafter, referred to as "buffer layers") outside the heat-sealable resin layer 53, more preferably outside the barrier layer 52. The buffer layer may be laminated outside the base material layer 51, and the base material layer 51 may also function as a buffer layer. In a case where the outer package film 50 includes a plurality of buffer layers, the plurality of buffer layers may lie side-by-side, or may be laminated with the base material layer 51, the barrier layer 52, or the like interposed between the buffer layers.

The material constituting the buffer layer can be arbitrarily selected from materials having a cushioning property. The material having a cushioning property is, for example, rubber, a nonwoven fabric, or a foamed sheet. The rubber is, for example, natural rubber, fluororubber, or silicone rubber. The rubber hardness is preferably about 20 to 90. The material constituting a nonwoven fabric is preferably a material having excellent heat resistance. In a case where the buffer layer is formed from a nonwoven fabric, the lower limit of the thickness of the buffer layer is preferably 100 µm, still more preferably 200 µm, still more preferably 1000 µm. In a case where the buffer layer is formed from a nonwoven fabric, the upper limit of the thickness of the buffer layer is preferably 5000 µm, still more preferably 3000 µm. The thickness of the buffer layer is preferably in the range of 100 µm to 5000 µm, 100 µm to 3000 µm, 200 µm to 5000 µm, 200 µm to 3000 µm, 1000 µm to 5000 µm, or 1000 µm to 3000 µm. The thickness of the buffer layer is most preferably in the range of 1000 µm to 3000 µm among these.

In a case where the buffer layer is formed from rubber, the lower limit of the thickness of the buffer layer is preferably 0.5 mm. In a case where the buffer layer is formed from rubber, the upper limit of the thickness of the buffer layer is preferably 10 mm, still more preferably 5 mm, still more preferably 2 mm. In a case where the buffer layer is formed from rubber, the thickness of the buffer layer is preferably in the range of 0.5 mm to 10 mm, 0.5 mm to 5 mm, or 0.5 mm to 2 mm.

In a case where the outer package film 50 includes a buffer layer, the buffer layer functions as a cushion, so that breakage of the outer package film 50 due to the impact of falling of the electrical storage device 10 or handling during manufacturing of the electrical storage device 10 is suppressed.

The lid 60 shown in Fig. 4 has, for example, a cuboid shape and contains a metal material. In the present embodiment, since the lid 60 contains a metal material, the lid 60 has a function as an electrode terminal. As such, the electrical storage device 10 has fewer constituent elements than the conventional electrical storage device. In a case where the lid 60 contains a metal material, the lid 60 preferably has the corrosion-resistant film described in the barrier layer 52. The lid 60 has a first surface 61, a second surface 62, and a seal surface 63. The first surface 61 faces the electrode assembly 20. The second surface 62 is a surface on a side opposite to the first surface 61. For example, an electrode terminal may be joined to the second surface 62 of the lid 60. The seal surface 63 is connected to the first surface 61 and the second surface 62 and is joined to the heat-sealable resin layer 53 of the outer package film 50. In order to suitably join the lid 60 and the outer package film 50, the seal surface 63 of the lid 60 is preferably joined with an adhesive film 90 interposed therebetween (see Fig. 5). The seal surface 63 may also be joined to the outer package film 50 with an adhesive layer interposed therebetween, in addition to or instead of the adhesive film 90. The adhesive film 90 or the adhesive layer may be a single layer or a multilayer, and preferably contains a resin material having at least a polar group. The adhesive layer can be formed by dip coating, a dispenser, inkjet, spraying, screen printing, or the like. At least one of the adhesive film 90 and the adhesive layer can also be provided at a position other than the seal surface 63 in the lid 60.

The lid 60 is formed from a metal material. Here, "formed from a metal material" means that the content of the metal material is 50 mass% or more, preferably 80 mass% or more, more preferably 90 mass% or more, and still more preferably 95 mass% or more when the total amount of materials constituting the lid 60 is defined as 100 mass%. In other words, the material constituting the lid 60 can contain materials other than the metal material in addition to the metal material.

The adhesive film 90 can be arbitrarily selected as long as it is a film capable of bonding the outer package film 50 and the lid 60. The adhesive film 90 is preferably a multilayer film including at least a heat-sealable resin layer, a heat-resistant base material layer and a heat-sealable resin layer in the stated order. As specifications about the heat-sealable resin layer of the adhesive film 90, specifications about the heat-sealable resin layer 53 can be applied. As materials constituting the heat-sealable resin layers on both sides of the adhesive film 90, the same material or different materials may be used, and materials that match the material constituting the heat-sealable resin layer 53 of the outer package film 50 and the material constituting the lid 60 are appropriately selected. The material constituting the heat-sealable resin layer of the adhesive film 90, which is bonded to the lid 60, is preferably an acid-modified polyolefin-based resin obtained by graft modification with an acid such as maleic anhydride. For the heat-sealable resin layer of the adhesive film 90, which is bonded to the outer package film 50, the same material as that constituting the heat-sealable resin layer 53 of the outer package film 50 is preferably used.

For the heat-resistant base material layer, any film may be used as long as it is formed from a heat-resistant resin, and examples thereof include non-stretched or stretched films of polyethylene terephthalate, polyethylene naphthalate, polyphenylene sulfide, polymethylpentene (registered trademark), polyacetal cyclic polyolefin, polyethylene, polypropylene and the like. Note that polyethylene terephthalate is particularly preferable because it is inexpensive and has high strength.

The adhesive film 90 preferably has adhesion. When the second seal portion 80 is formed with the adhesive film 90 disposed between the outer package film 50 and the lid 60, the adhesive film 90 is hardly displaced with respect to the lid 60 and the outer package film 50. By incorporating an adhesion-imparting resin into the heat-sealable resin layer of the adhesive film 90, adhesion can be imparted to the adhesive film 90. Examples of the adhesion-imparting resin include amorphous polyolefins. Examples of the amorphous polyolefin include amorphous polypropylene, and copolymers of amorphous propylene and another α-olefin. The content of the adhesion-imparting resin with respect to the parent material constituting the heat-sealable resin is preferably 10 to 20 wt% or less.

The seal surface 63 includes a first seal surface 63A, a second seal surface 63B, a third seal surface 63C, and a fourth seal surface 63D. The first seal surface 63A forms the upper surface of the lid 60. The first seal surface 63A extends in a first direction (LR direction in the present embodiment) in front view of the lid 60. The second seal surface 63B and the third seal surface 63C are connected to the first seal surface 63A and form the lateral surfaces of the lid 60. The second seal surface 63B and the third seal surface 63C extend in a second direction (UD direction in the present embodiment) crossing the first direction in front view of the lid 60. In the present embodiment, the first direction and the second direction orthogonally cross each other in front view of the lid 60. The first direction and the second direction are not required to orthogonally cross each other in front view of the lid 60. The fourth seal surface 63D forms the lower surface of the lid 60. The fourth seal surface 63D extends in the first direction (LR direction in the present embodiment) in front view of the lid 60.

In a case where the lid 60 has a plate shape, the lid 60 is preferably thick to some extent to suppress deformation of the outer packaging 40 even in a case where electrical storage devices 10 are stacked on one another. From another viewpoint, in a case where the lid 60 has a plate shape, the seal surface 63 of the lid 60 is preferably thick to some extent such that the seal surface 63 of the lid 60 and the outer package film 50 can be suitably heat-sealed when the second seal portion 80, which will be described later, is formed. The minimum value of the thickness of the lid 60 is 1.0 mm, more preferably 3.0 mm, still more preferably 4.0 mm. The maximum value of the thickness of the lid 60 is, for example, 20 mm, more preferably 8.0 mm, still more preferably 7.0 mm. The maximum value of the thickness of the lid 60 may be 20 mm or more. The thickness of the material constituting the lid 60 is preferably in the range of 1.0 mm to 20 mm, 1.0 mm to 15 mm, 1.0 mm to 10 mm, 3.0 mm to 20 mm, 3.0 mm to 15 mm, 3.0 mm to 10 mm, 4.0 mm to 20 mm, 4.0 mm to 15 mm, or 4.0 mm to 10 mm. The thickness of the lid 60 may vary depending on a portion of the lid 60. When the thickness of the lid 60 varies depending on a portion, the thickness of the thickest portion of the lid 60 is defined as a thickness of the lid 60.

The lid 60 further includes boundaries 64, 65, 66 and 67. The boundary 64 is a boundary between the first seal surface 63A and the second seal surface 63B. The boundary 65 is a boundary between the first seal surface 63A and the third seal surface 63C. The boundary 66 is a boundary between the fourth seal surface 63D and the second seal surface 63B. The boundary 67 is a boundary between the fourth seal surface 63D and the third seal surface 63C. The shapes of the boundaries 64 to 67 may be angular, or may be rounded off by R processing. In the present embodiment, the boundaries 64 to 67 are angular.

In the present embodiment, in order to suitably join the end part 31A of the current collector 31, the conductive member 32 is disposed separately from the lid 60 having a function as an electrode terminal. The entire conductive member 32 is disposed between the electrode assembly 20 and the lid 60. The conductive member 32 contains a metal material. The metal material constituting the conductive member 32 is, for example, aluminum, nickel, copper, or the like. For example, in a case where the electrode assembly 20 is a lithium ion battery, the conductive member 32 connected to the positive electrode is preferably formed from aluminum or the like, and the conductive member 32 connected to the negative electrode is preferably formed from copper, nickel, or the like. The conductive member 32 and the lid 60 are joined to constitute a lid unit 60Z.

The conductive member 32 is formed from a metal material. Here, "formed from a metal material" means that the content of the metal material is 50 mass% or more, preferably 80 mass% or more, more preferably 90 mass% or more, and still more preferably 95 mass% or more when the total amount of materials constituting the conductive member 32 is defined as 100 mass%. In other words, the materials constituting the conductive member 32 can contain materials other than the metal material in addition to the metal material.

The shape of the conductive member 32 can be arbitrarily selected as long as it can be joined to the end part 31A of the current collector 31. In the present embodiment, the shape of the conductive member 32 is a cuboid. The shape of the conductive member 32 may be a cube, a polygonal prism, a polygonal pyramid, a cylinder, or a sphere.

The conductive member 32 has a first surface 32A and a second surface 32B. The first surface 32A is joined to the first surface 61 of the lid 60 by welding or the like, for example. The second surface 32B is joined to the end part 31A of the current collector 31 by welding or the like, for example. The second surface 32B and the end part 31A of the current collector 31 may be joined by screw fixing, press fitting, shrink fitting, caulking welding, pressure welding, brazing, or an adhesive. In a case where the second surface 32B and the end part 31A of the current collector 31 are joined by an adhesive, the second surface 32B and the end part 31A of the current collector 30 may have conductivity in at least one of a portion joined by the adhesive and a portion other than the portion joined by the adhesive.

The number of conductive members 32 disposed in one electrical storage device 10 can be arbitrarily selected. In the present embodiment, one conductive member 32 is disposed on each of the positive electrode side and the negative electrode side. Two or more conductive members 32 may be disposed on each of the positive electrode side and the negative electrode side, and the number of conductive members 32 disposed on the positive electrode side may be different from the number of conductive members 32 disposed on the negative electrode side.

From the viewpoint of suppressing the energy loss, at least one of the sum SA of the cross-sectional area of the conductive member 32 on the positive electrode side and the sum SB of the cross-sectional area of the conductive member 32 on the negative electrode side is preferably 4 mm² or more. The cross-sectional area of the conductive member 32 is an area of a cross section obtained by cutting the conductive member 32 in a direction perpendicular to a direction in which the current of the conductive member 32 flows in side view. In a case where one conductive member 32 is disposed on the positive electrode side, the sum SA is a cross-sectional area of one conductive member 32. In a case where one conductive member 32 is disposed on the negative electrode side, the sum SB is a cross-sectional area of one conductive member 32. In a case where a plurality of the conductive members 32 are disposed on the positive electrode side, the sum SA is a sum of cross-sectional areas of the plurality of the conductive members 32. In a case where a plurality of the conductive members 32 is disposed on the negative electrode side, the sum SB is a sum of cross-sectional areas of the plurality of the conductive members 32.

In the present embodiment, surfaces of the outer package film 50 which face each other (heat-sealable resin layer 53) are heat-sealed in a state where the outer package film 50 is wrapped around the electrode assembly 20 to have the opening part 40A to thereby form a first seal portion 70.

The first seal portion 70 is formed by heat-sealing a portion including a first edge 50A and a portion including a second edge 50B in the outer package film 50 shown in Fig. 3. The first seal portion 70 extends in a longitudinal direction of the outer packaging 40. In the outer packaging 40, a position at which the first seal portion 70 is formed can be arbitrarily selected. In the present embodiment, a root 70X of the first seal portion 70 is preferably located on an edge 43 of a boundary between a first surface 41 and a second surface 42 of the outer packaging 40. The first surface 41 has a larger area than the second surface 42. The root 70X of the first seal portion 70 may be located on an arbitrary surface of the outer packaging 40. In the present embodiment, the first seal portion 70 protrudes further outward than the electrode assembly 20 in plan view. The first seal portion 70 may be folded toward the second surface 42 of the outer packaging 40, or may be folded toward the first surface 41, for example.

In the present embodiment, the second seal portion 80 is formed by the heat-sealable resin layer 53 of the outer package film 50 and the seal surface 63 of the lid 60 being heat-sealed. Hereinafter, the sealing strength between the heat-sealable resin layer 53 of the outer package film 50 and the seal surface 63 of the lid 60 may be referred to as sealing strength of the second seal portion 80. The sealing strength of the second seal portion 80 is the sealing strength between the heat-sealable resin layer 53 and the lid 60 in the long-side portion of the seal surface 63, that is, the seal surface 63 extending in the LR (width) direction in Fig. 1.

The sealing strength of the second seal portion 80 is measured as follows. First, a notch is formed at a part of the outer package film 50 constituting the first surface 41 of the outer packaging 40, and three strip-shaped members 41X, 41Y, and 41Z (see the two-dotted chain line in Fig. 1B) aligned in the LR direction are formed. The widths of the three strip-shaped members 41X, 41Y, and 41Z in the LR direction are 15 mm. End parts of the strip-shaped members 41X, 41Y, and 41Z are joined to the lid 60 at the second seal portion 80. The length of the lid 60 in the LR direction is 45 mm or more. Next, the sealing strength of each of the strip-shaped members 41X, 41Y, and 41Z is measured by pulling the end part opposite to the end parts of the strip-shaped members 41X, 41Y, and 41Z joined to the lid 60 upward in the UD direction (direction opposite to the first surface 41B). The distance between chucks in the UD direction is 10 mm. The sealing strength of each of the strip-shaped members 41X, 41Y, and 41Z is a peak value of the sealing strength of each of the strip-shaped members 41X, 41Y, and 41Z. In the present embodiment, the sealing strength of the second seal portion 80 is an average value of the sealing strengths of the strip-shaped members 41X, 41Y, and 41Z. In a case where the length of the lid 60 in the LR direction is less than 45 mm, three strip-shaped members having an arbitrary width X mm, which is less than 15 mm, are formed, and the sealing strength of the three strip-shaped members is measured by a method similar to that adopted when the length of the lid 60 in the LR direction is 45 mm or more. Each obtained sealing strength is divided by an arbitrary width X mm and multiplied by 15 to be converted into the sealing strength of the three strip-shaped members at the width of 15 mm. The sealing strength of the second seal portion 80 is an average value of the sealing strengths of the three strip-shaped members converted into the value at the width of 15 mm. Note that the sealing strength of the second seal portion 80 in a case where the lid 60 is divided into a plurality of parts including long sides and short sides is sealing strength of the long side parts of the seal surfaces 63 of the plurality of parts.

From the viewpoint of suitably maintaining the state where the electrode assembly 20 is sealed with the outer packaging 40, the sealing strength of the second seal portion 80 is preferably 40 N/15 mm or more, more preferably 50 N/15 mm or more, still more preferably 60 N/15 mm or more, still more preferably 70 N/15 mm or more, still more preferably 85 N/15 mm or more. In a case where the sealing strength of the second seal portion 80 is 40 N/15 mm or more, the state where the electrode assembly 20 is sealed with the outer packaging 40 is suitably maintained even when the electrical storage device 10 is used for, for example, several years (less than 10 years). In a case where the sealing strength of the second seal portion 80 is 85 N/15 mm or more, the state where the electrode assembly 20 is sealed with the outer packaging 40 is suitably maintained even when the electrical storage device 10 is used for, for example, 10 years or more. The sealing strength of the second seal portion 80 is preferably 300 N/15 mm or less. The sealing strength of the second seal portion 80 is preferably in the range of 40 N/15 mm to 300 N/15 mm, 50 N/15 mm to 300 N/15 mm, 60 N/15 mm to 300 N/15 mm, 70 N/15 mm to 300 N/15 mm, or 85 N/15 mm to 300 N/15 mm.

### <1-2. Method for manufacturing electrical storage device>

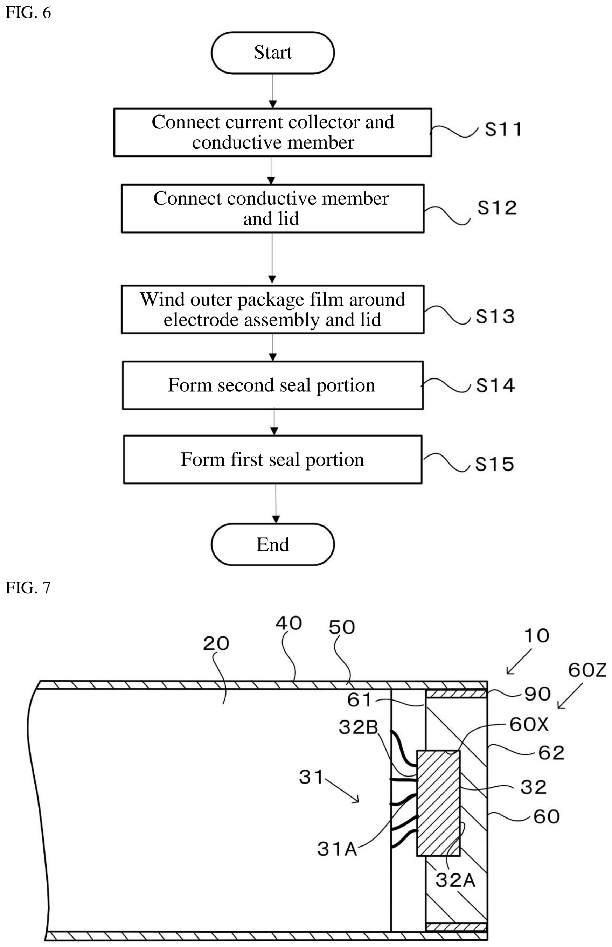

Fig. 6 is a flowchart showing an example of a method for manufacturing the electrical storage device 10. The method for manufacturing the electrical storage device 10 includes, for example, a first step, a second step, a third step, a fourth step and a fifth step. The first to fifth steps are carried out by, for example, an apparatus for manufacturing the electrical storage device 10. At least a part of the first to fifth steps may be carried out by an operator. Note that the first to fifth steps are merely convenient labels for the steps in the method for manufacturing the electrical storage device 10 and do not necessarily mean the order of the steps.

In the first step (first connection step) of Step S11, the manufacturing apparatus joins the end part 31A of the current collector 31 and the second surface 32B of the conductive member 32. By carrying out the first step earlier than the second step to be described later, the current collector 31 and the conductive member 32 can be easily joined.

The second step (second connection step) in Step S12 is carried out later than the first step. In the second step, the manufacturing apparatus joins the first surface 32A of the conductive member 32 and the first surface 61 of the lid 60. The second step may be carried out earlier than the first step, or may be carried out later than the third step to be described later.

The third step in Step S13 is carried out later than the first step. In the third step, the manufacturing apparatus winds the outer package film 50 around the electrode assembly 20 and the lid 60 with tension applied to the outer package film 50 while controlling the movement of the electrode assembly 20 and the lid 60 by a restriction means. The restriction means is, for example, a groove into which the electrode assembly 20 and the lid 60 are fitted. The restriction means may be an apparatus that applies an external force to the electrode assembly 20 and the lid 60 so that the electrode assembly 20 and the lid 60 do not move. The restriction means may be an apparatus that applies a force to the electrode assembly 20 and the lid 60 in a direction opposite to a direction in which the outer package film 50 is pulled. Note that the restriction means may include a roller for removing wrinkles of the outer package film 50 by running on the outer package film 50 with the outer package film 50 being pulled.

The fourth step in Step S14 is carried out later than the third step. The manufacturing apparatus forms the second seal portion 80 by heat-sealing the outer package film 50 and the lid 60.

The fifth step in Step S15 is carried out earlier or later than the fourth step. In the fifth step, the manufacturing apparatus forms the first seal portion 70 by heat-sealing the heat-sealable resin layer 53 in a portion including the first edge 50A of the outer package film 50 and the heat-sealable resin layer 53 in a portion including the second edge 50B such that a protrusion 68 of the lid 60 is sandwiched by the outer package film 50, where the heat-sealing is performed with tension applied to the outer package film 50 while the movement of the electrode assembly 20 and the lid 60 is restricted.

### <1-3. Action and effect of electrical storage device>

According to the electrical storage device 10, since the conductive member 32 is disposed between the electrode assembly 20 and the lid 60, the end part 31A of the current collector 31 can be suitably constrained.

### [2. Modifications]

The above-described embodiment is an example of possible forms of an electrical storage device, a conductive member, a lid unit, and a method for manufacturing an electrical storage device according to the present invention, and is not intended to limit the forms thereof. The electrical storage device, the conductive member, the lid unit, and the method for manufacturing an electrical storage device according to the present invention may have a form different from that exemplified in the embodiment. An example thereof is a form in which a part of the configuration of the embodiment is replaced, changed or omitted, or a form in which a new configuration is added to the embodiment. Some examples of modifications of the embodiment will be described below. Note that the following modifications can be combined as long as they are not technically contradictory.

### <2-1. First modification>

In the above-described embodiment, the configuration of the lid 60 can be changed as long as it can be joined to the conductive member 32. As shown in Fig. 7, the lid 60 may have a recessed portion 60X recessed from the first surface 61 toward the second surface 62. The recessed portion 60X does not penetrate the lid 60. The inner contour shape of the recessed portion 60X is preferably a shape corresponding to the outer contour shape of the conductive member 32. At least a part of the conductive member 32 is housed in the recessed portion 60X. In the example shown in Fig. 7, a portion including the second surface 32B of the conductive member 32 is exposed from the recessed portion 60X.

### <2-2. Second modification>

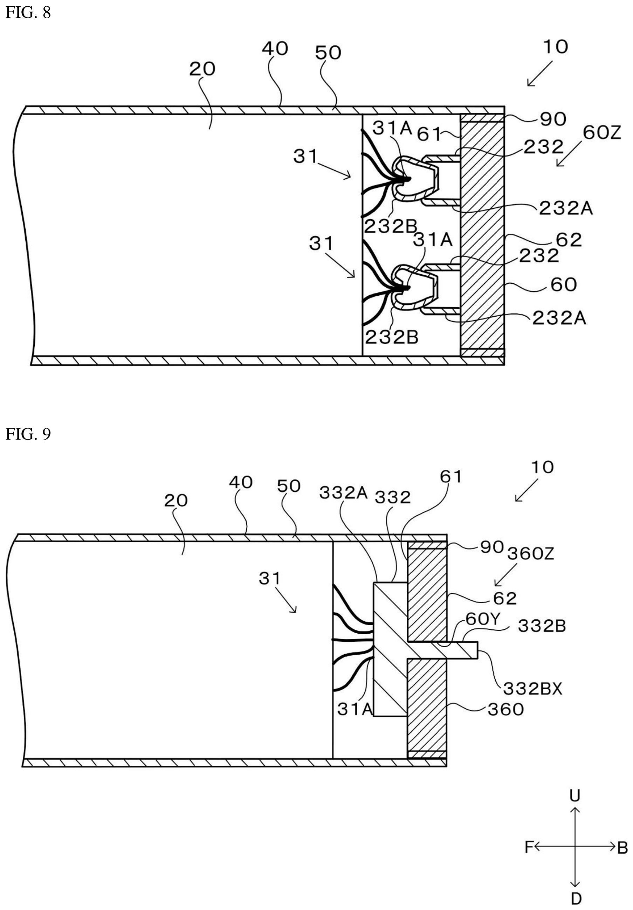

In the above-described embodiment, the configuration of the conductive member 32 can be arbitrarily changed as long as it can be connected to the end part 31A of the current collector 31. Fig. 8 is a cross-sectional view of an electrical storage device 10 including a conductive member 232 of a second modification. The conductive member 232 is, for example, a known clip. The conductive member 232 may be a slide clip. The conductive member 232 includes a base portion 232A and a clamping portion 232B. The base portion 232A is joined to the first surface 61 of the lid 60. The clamping portion 232B is connected to the base portion 232A and is configured to clamp a portion including the end part 31A of the current collector 31. In the second modification, since the current collector 31 and the conductive member 32 can be connected by clamping the portion including the end part 31A of the current collector 31 with the clamping portion 232B, the electrical storage device 10 can be easily manufactured. In a case where the conductive member 232 is a slide clip, in the FB direction, the current collector 31 can be inserted into the clamping portion 232B in a direction approaching the base portion 232A, and is restricted from moving in a direction separating from the base portion 232A by the clamping portion 232B. Therefore, a state where the current collector 31 is clamped by the clamping portion 232B is suitably maintained.

### <2-3. Third modification>

In the above-described embodiment, the configurations of the lid 60 and the conductive member 32 may be changed as shown in Fig. 9. Fig. 9 is a sectional view of an electrical storage device 10 of a third modification. The electrical storage device 10 of the third modification includes a lid 360 and a conductive member 332.

A through-hole 60Y penetrating the first surface 61 and the second surface 62 is formed in the lid 360. In the third modification, the material constituting the lid 360 can be arbitrarily selected. The material constituting the lid 360 may be a metal material or a resin material. The material constituting the lid 360 may include at least two or more kinds of materials from among a metal oxide, a carbon material, and a rubber material. The material constituting the lid 360 may include all of a metal oxide, a carbon material, and a rubber material.

In a case where the lid 360 has a plate shape, the lid 360 is preferably thick to some extent to suppress deformation of the outer packaging 40 even in a case where electrical storage devices 10 are stacked on one another. From another point of view, when the lid 360 has a plate shape, the seal surface 63 of the lid 360 is preferably thick enough to ensure that the seal surface 63 of the lid 360 and the outer package film 50 can be suitably heat-sealed in formation of the second seal portion 80. The minimum value of the thickness of the lid 360 is, for example, 1.0 mm, more preferably 3.0 mm, still more preferably 4.0 mm. The maximum value of the thickness of the lid 360 is, for example, 20 mm, more preferably 8.0 mm, still more preferably 7.0 mm. The maximum value of the thickness of the lid 360 may be 20 mm or more. The thickness of the material constituting the lid 360 is preferably in the range of 1.0 mm to 20 mm, 1.0 mm to 15 mm, 1.0 mm to 10 mm, 3.0 mm to 20 mm, 3.0 mm to 15 mm, 3.0 mm to 10 mm, 4.0 mm to 20 mm, 4.0 mm to 15 mm, or 4.0 mm to 10 mm. In the third modification, when the lid 360 is described as having a plate shape, the lid 360 does not include an aspect formed from only a film defined by Japanese Industrial Standard (JIS), Packaging Terminology Standard. The thickness of the lid 360 may vary depending on a portion of the lid 360. In a case where the thickness of the lid 360 varies depending on a portion, the thickness of the thickest portion of the lid 360 is defined as a thickness of the lid 360.

The conductive member 332 includes a base portion 332A and a protrusion 332B connected to the base portion 332A. The base portion 332A and the protrusion 332B may be integrally formed, or may be separately formed and joined.

At least one of the base portion 332A and the protrusion 332B is joined to an arbitrary portion of the lid 360. In the example shown in Fig. 9, the base portion 332A is joined to the first surface 61 of the lid 360 by, for example, welding or the like. The base portion 332A may be joined to the first surface 61 of the lid 360 by screw fixing, press fitting, shrink fitting, caulking welding, pressure welding, brazing, or an adhesive. In a case where the base portion 332A and the first surface 61 of the lid 360 are joined by an adhesive, the base portion 332A and the first surface 61 of the lid 360 may have conductivity in at least one of a portion joined by the adhesive and a portion other than the portion joined by the adhesive. The base portion 332A and the first surface 61 of the lid 360 may be joined by caulking. In a case where the base portion 332A and the first surface 61 of the lid 360 are joined by caulking, an adhesion assisting member may be disposed between the base portion 332A and the first surface 61 of the lid 360. The adhesion assisting member is, for example, a foam material, a sponge, a resin, or rubber. From the viewpoint of connecting more current collectors 31, the thickness of the base portion 332A in the UD direction is preferably larger than the thickness of the protrusion 332B in side view. Alternatively, the thickness of the base portion 332A in the LR direction is preferably larger than the thickness of the protrusion 332B in plan view.

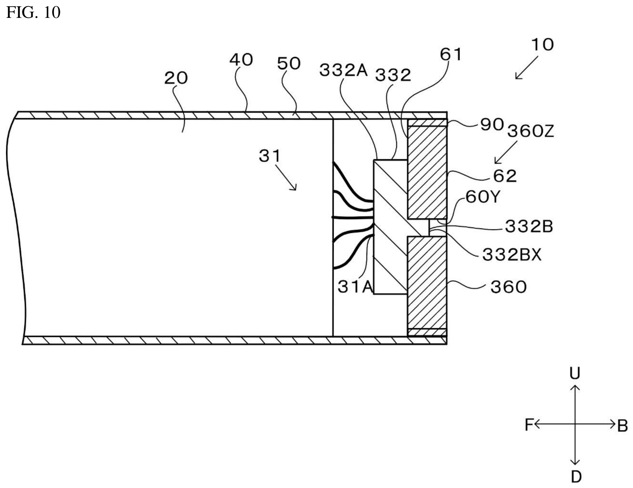

The protrusion 332B is inserted into the through-hole 60Y. The position of a tip end 332BX of the protrusion 332B can be arbitrarily selected. As shown in Fig. 9, the tip end 332BX may be located outside the through-hole 60Y. As shown in Fig. 10, the tip end 332BX may be located inside the through-hole 60Y. In the third modification, the lid 360 and the conductive member 332 constitute a lid unit 360Z. In the third modification, the lid 360 may be composed of a plurality of divided parts.

### <2-4. Fourth modification>

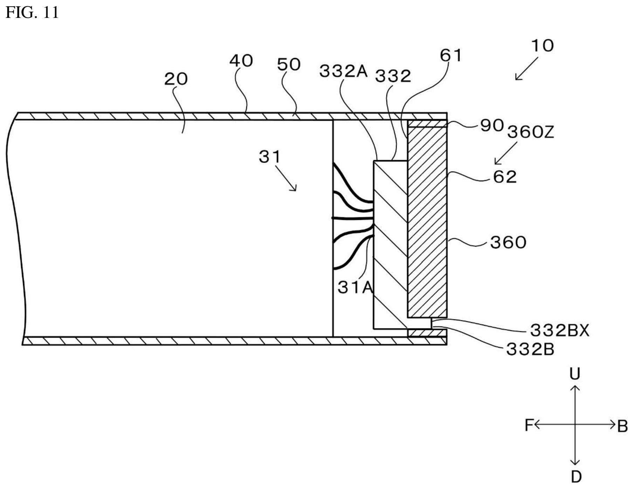

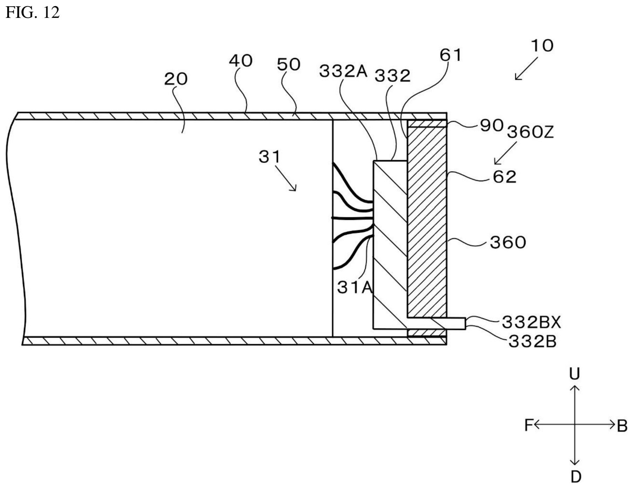

As in a fourth modification shown in Fig. 11, the through-hole 60Y can be omitted from the lid 360 of the third modification. In the fourth modification, the protrusion 332B is inserted between the outer package film 50 and the lid 60. In the example shown in Fig. 11, the tip end 332BX is located between the outer package film 50 and the lid 360. As shown in Fig. 12, the tip end 332BX may be located outside the outer packaging 40. In the fourth modification, the lid 360 may be composed of a plurality of divided parts.

### <2-5. Fifth modification>

In the above-described embodiment, the lid 60 and the outer package film 50 are joined to each other with the adhesive film 90 interposed therebetween, but the lid 60 and the outer package film 50 may be joined to each other with a resin molded body interposed therebetween. The resin molded body covers at least a part of the seal surface 63 of the lid 60. When the resin molded body covers the entire seal surface 63 of the lid 60, the resin molded body is a frame surrounding the seal surface 63 of the lid 60.

The resin molded body is formed from a resin material. Here, "formed from a resin material" means that the content of the resin material is 50 mass% or more, preferably 80 mass% or more, more preferably 90 mass% or more, and still more preferably 95 mass% or more when the total amount of materials constituting the resin molded body is defined as 100 mass%. In other words, the material constituting the resin molded body can contain materials other than the resin material in addition to the resin material.

Specific examples of the resin include resins such as polyester, polyolefin, polyamide, an epoxy resin, an acrylic resin, a fluororesin, polyurethane, a silicone resin, and a phenol resin, and thermoplastic resins such as modified products of these resins. The resin material may be a mixture of these resins, a copolymer of these resins, or a modified product of the copolymer. Among them, the resin material is preferably a heat-sealable resin such as polyester or polyolefin, and more preferably polyolefin. In a case where the resin material is a resin, the resin molded body may be molded by any molding method.

The resin material contained in the material constituting the resin molded body is preferably an olefin-based random copolymer, more preferably contains a resin containing a polyolefin backbone as a main component, still more preferably contains a polyolefin as a main component, and still more preferably contains polypropylene as a main component. The polyolefin may be an acid-modified polyolefin. The resin material contained in the material constituting the resin molded body preferably contains a plurality of kinds of amide-based lubricants. In the resin material contained in the material constituting the resin molded body, it is preferable that the plurality of amide-based lubricants further contain an unsaturated fatty acid amide in addition to the saturated fatty acid amide. The resin material contained in the material constituting the resin molded body may be a polyolefin resin to which a propylene-based elastomer having a melting point higher than 150°C is added.

Specific examples of the polyester include polyethylene terephthalate, polybutylene terephthalate, polyethylene naphthalate, polybutylene naphthalate, polyethylene isophthalate, and copolyesters. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate), and polyethylene(terephthalate/decane dicarboxylate). Among these, the resin material is preferably polybutylene terephthalate from the viewpoint of enhancing heat resistance and pressure resistance.

Specific examples of polyolefin include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (for example, block copolymers of propylene and ethylene) and random copolymers of polypropylene (for example, random copolymers of propylene and ethylene); propylene-α-olefin copolymers; and terpolymers of ethylene-butene-propylene. The polyolefin resin in the case of a copolymer may be a block copolymer or a random copolymer. Among them, the resin material is preferably polypropylene because it is excellent in heat-sealability and electrolytic solution resistance.

The resin as the resin material may contain a filler as necessary. Specific examples of the filler include glass beads, graphite, glass fiber, and carbon fiber. By the resin as the resin material containing the filler, deformation resistance of the resin molded body against a temperature change can be improved.

The melt mass flow rate of the resin material contained in the material constituting the resin molded body is preferably in the range of 1 g/10 min to 100 g/10 min, and more preferably in the range of 5 g/10 min to 80 g/10 min. The melt mass flow rate is measured on the basis of JIS K7210-1:2014.

### <2-6. Sixth modification>

In the above-described embodiment, the outer package film 50 of the electrical storage device 10 may protrude further outward than at least one of the two lids 60 in the FB direction. The electrode assembly 20 is sealed by the part of the outer package film 50 protruding further outward than the lid 60 being closed. The part of the outer package film 50 protruding further outward than the lid 60 may be folded like a gable top pouch or a brick-shaped pouch. In the fourth modification, the electrode terminal is preferably joined to the second surface 62 of the lid 60. The length of the electrode terminal in the FB direction is preferably such a length that the electrode terminal is exposed from the part of the outer package film 50 protruding further outward than the lid 60.

### <2-7. Seventh modification>

In the above-described embodiment, the outer packaging 40 is not required to include one of the two lids 60. In this modification, the electrode assembly 20 is sealed by the part of the outer package film 50 protruding further outward than the electrode assembly 20 being closed at the part of the outer packaging 40 from which the lid 60 is omitted in the FB direction. The part of the outer package film 50 protruding further outward than the electrode assembly 20 may be folded like a gable top pouch or a brick-shaped pouch.

### <2-8. Eighth modification>

In the above-described embodiments, the outer contour shape of the outer packaging 40 can be arbitrarily changed. The outer contour shape of the outer packaging 40 may be a cylinder, a prism, or a cube.

### Reference Signs List

10 Electrical storage device
20 Electrode assembly
31 Current collector
32, 232, 332 Conductive member
40 Outer packaging
50 Outer package film
60, 360 Lid
60X Recessed portion
60Y Through-hole
61 First surface
62 Second surface
232A, 332A Base portion
232B Clamping portion
332B Protrusion
332BX Tip end

## Claims

1. An electrical storage device comprising:
an electrode assembly including a current collector;
an outer package film that wraps the electrode assembly;
a lid that contains a metal material and seals the electrode assembly together with the outer package film; and
a conductive member connected to the lid and the current collector,
wherein the conductive member is disposed between the lid and the electrode assembly.

2. The electrical storage device according to claim 1, wherein the lid has a recessed portion that houses at least a part of the conductive member.

3. The electrical storage device according to claim **1,** wherein
the conductive member includes:
a base portion joined to the lid; and
a clamping portion that is connected to the base portion and clamps the current collector.

4. A conductive member used for an electrical storage device, wherein
the electrical storage device includes:
an electrode assembly including a current collector;
an outer package film that wraps the electrode assembly; and
a lid that contains a metal material and seals the electrode assembly together with the outer package film, and
the conductive member is disposed between the lid and the electrode assembly, and is connected to the lid and the current collector.

5. A lid unit comprising:
the conductive member according to claim 4; and
the lid joined to the conductive member.

6. A method for manufacturing an electrical storage device,
the electrical storage device including:
an electrode assembly including a current collector;
an outer package film that wraps the electrode assembly;
a lid that contains a metal material and seals the electrode assembly together with the outer package film; and
a conductive member connected to the lid and the current collector,
the conductive member being disposed between the lid and the electrode assembly,
the method comprising:
a first connection step of connecting the current collector and the conductive member; and
a second connection step of connecting the conductive member and the lid.

7. The method for manufacturing an electrical storage device according to claim 6, wherein the first connection step is carried out earlier than the second connection step.

8. An electrical storage device comprising:
an electrode assembly including a current collector;
an outer package film that wraps the electrode assembly;
a lid that seals the electrode assembly together with the outer package film; and
a conductive member connected to the lid and the current collector,
wherein the lid includes:
a first surface facing the electrode assembly;
a second surface opposite to the first surface; and
a through-hole penetrating the first surface and the second surface,
the conductive member includes:
a base portion joined to the current collector; and
a protrusion connected to the base portion and inserted into the through-hole, and
a thickness of the base portion is larger than a thickness of the protrusion in side view or plan view.

9. The electrical storage device according to claim 8, wherein a tip end of the protrusion is located inside the through-hole.

10. The electrical storage device according to claim 8, wherein a tip end of the protrusion is located outside the through-hole.

11. A conductive member used for an electrical storage device, wherein
the electrical storage device includes:
an electrode assembly including a current collector;
an outer package film that wraps the electrode assembly; and
a lid that seals the electrode assembly together with the outer package film,
the lid includes:
a first surface facing the electrode assembly;
a second surface opposite to the first surface; and
a through-hole penetrating the first surface and the second surface,
the conductive member includes:
a base portion joined to the current collector; and
a protrusion connected to the base portion and inserted into the through-hole, and
a thickness of the base portion is larger than a thickness of the protrusion in side view or plan view.

12. A lid unit comprising:
the conductive member according to claim 11; and
the lid joined to the conductive member.

13. A method for manufacturing an electrical storage device,
the electrical storage device including:
an electrode assembly including a current collector;
an outer package film that wraps the electrode assembly;
a lid that seals the electrode assembly together with the outer package film; and
a conductive member connected to the lid and the current collector,
the lid including:
a first surface facing the electrode assembly;
a second surface opposite to the first surface; and
a through-hole penetrating the first surface and the second surface,
the conductive member including:
a base portion joined to the current collector; and
a protrusion connected to the base portion and inserted into the through-hole,
a thickness of the base portion being larger than a thickness of the protrusion in side view or plan view,
the method comprising:
a first connection step of connecting the current collector and the conductive member; and
a second connection step of connecting the conductive member and the lid.

14. The method for manufacturing an electrical storage device according to claim 13, wherein the first connection step is carried out earlier than the second connection step.

15. An electrical storage device comprising:
an electrode assembly including a current collector;
an outer package film that wraps the electrode assembly;
a lid that seals the electrode assembly together with the outer package film; and
a conductive member connected to the lid and the current collector,
wherein the conductive member includes:
a base portion joined to the current collector; and
a protrusion connected to the base portion and inserted between the outer package film and the lid, and
a thickness of the base portion is larger than a thickness of the protrusion in side view or plan view.

16. A conductive member used for an electrical storage device, wherein
the electrical storage device includes:
an electrode assembly including a current collector;
an outer package film that wraps the electrode assembly; and
a lid that seals the electrode assembly together with the outer package film,
the conductive member includes:
a base portion joined to the current collector; and
a protrusion connected to the base portion and inserted between the outer package film and the lid, and
a thickness of the base portion is larger than a thickness of the protrusion in side view or plan view.

17. A lid unit comprising:
the conductive member according to claim 16; and
the lid joined to the conductive member.

18. A method for manufacturing an electrical storage device,
the electrical storage device including:
an electrode assembly including a current collector;
an outer package film that wraps the electrode assembly;
a lid that seals the electrode assembly together with the outer package film; and
a conductive member connected to the lid and the current collector,
the conductive member including:
a base portion joined to the current collector; and
a protrusion connected to the base portion and inserted between the outer package film and the lid,
a thickness of the base portion being larger than a thickness of the protrusion in side view or plan view,
the method comprising:
a first connection step of connecting the current collector and the conductive member; and
a second connection step of connecting the conductive member and the lid.

19. The method for manufacturing an electrical storage device according to claim 18, wherein the first connection step is carried out earlier than the second connection step.
